# EUROPEAN PATENT APPLICATION

(11) **EP 2 378 031 A1**
(43) Date of publication of application: **19.10.2011**
(21) Application number: 10838394.4
(22) Date of filing: 22.06.2010
(51) Int. Cl.: E04G 21/04, B25J 13/08, G01C 15/00

(54) **POSITIONING METHOD AND DEVICE OF ARM SUPPORT SYSTEM AND CONCRETE PUMP TRUCK**

(30) Priority: 25.12.2009 CN 200910260223
(71) Applicant: Hunan Sany Intelligent Control Equipment Co., Ltd, Hunan 410100 (CN); Sany Heavy Industry Co., Ltd., Changsha Hunan 410100 (CN)
(72) Inventor: YI, Xiaogang, Hunan 410100 (CN); ZHOU, Xiang, Hunan 410100 (CN); ZHOU, Jihui, Hunan 410100 (CN); CHEN, Antao, Hunan 410100 (CN); WU, Hanqi, Hunan 410100 (CN)
(74) Representative: Kopf, Korbinian Paul
(86) International application number: PCT/CN2010/074227
(87) International publication number: WO 2011/075985

(57) **Abstract**

A positioning method of the boom system includes the steps of obtaining initial position parameters of a detection point according to the observation of a mobile GPS receiver to a satellite group, and obtaining carrier wave phase information transmitted by a reference GPS receiver (S100), in which a distance between the boom system and the reference station is less than a predetermined value; and then obtaining position parameters of the detection point according to the carrier wave phase information and the initial position parameters (S200). The technical solution utilizes the carrier wave phase differential principle to obtain the position parameters of the detection point, such that the precision thereof is up to a level of a centimeter or higher. When predetermined portions of the boom segments or the position parameters of the boom distal end are detected, their position parameters may be precisely determined. A positioning device of the boom system and a concrete pump truck including the device are also provided.

## Description

The present, application claims the benefit of priority to Chinese patent application No. 200910260223.0 titled "POSITIONING METHOD AND POSITIONING DEVICE OF A BOOM SYSTEM AND CONCRETE PUMP TRUCK", filed with the Chinese State Intellectual Property Office on December 25, 2009. The entire disclosures thereof are incorporated herein by reference.

### FIELD OF THE INVENTION

The invention relates to control technologies of a boom system, particular to a positioning method and a positioning device of a boom system, and also relates to a concrete pump truck including the positioning device of the boom system.

### BACKGROUND OF THE INVENTION

The concrete pump truck is a common engineering machinery, which is used to transport concrete slurry to a predetermined site through a transporting pipe so as to perform concrete pouring work at a location far from a mixing station.

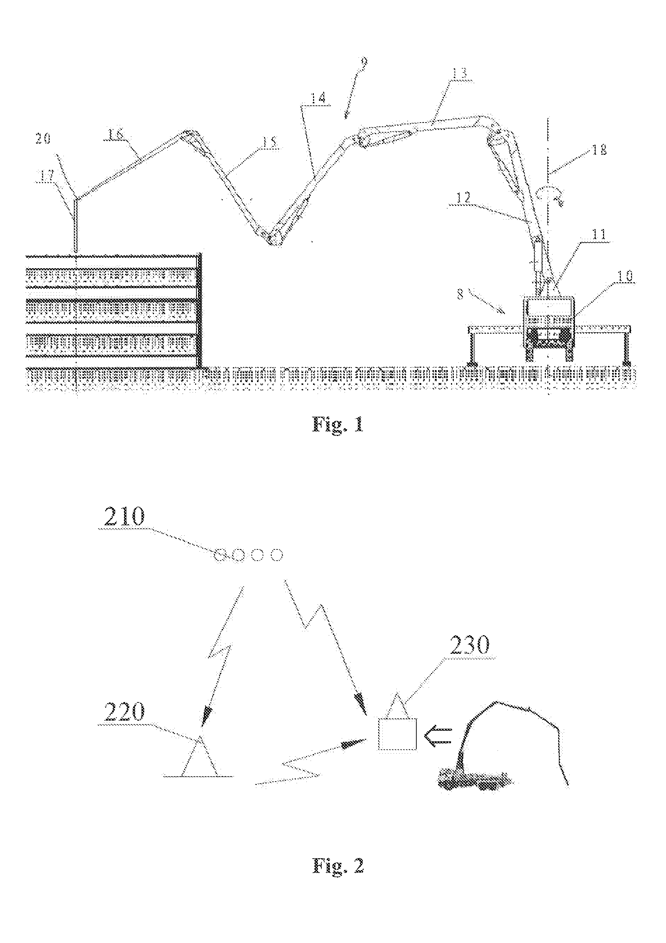

As shown in Fig. 1, an overall structural view of a concrete pump truck is shown. A concrete pump truck includes a concrete pump and a boom system. The boom system 8 includes a base 10, a rotating platform 11 and a boom 9. For being convenient to site transfer in construction, the base 10 is generally mounted on a mobile chassis. The rotating platform 11 is mounted on the base 10 by a swiveling mechanism, and is rotated around a vertical axis 18 by a hydraulic motor. The boom 9 includes five boom segments 12 to 16 which are hinged in sequence by hinge shafts. The lower end of the boom segment 12 is hinged with the rotating platform 11, and the separation angle between the boom segment 12 and the rotating platform 11 may be changed by one hydraulic cylinder, and respective boom segments may be rotated around the hinge shaft therebetween under driving of one hydraulic cylinder so as to change the position relationship between the boom segments. In addition, a hose 17 connected to the outmost end the distal boom segment 16 of the boom 9 is additionally provided, and the outmost end the distal boom segment 16 forms a boom distal end 20.

In concrete construction work, an operator controls the boom system 8 in an appropriate manner. Specifically, the relative positions between the boom segments of the boom 9 may be controlled by adjusting the telescopic amount of the hydraulic cylinders, and the rotating angle of the rotating platform 11 may be controlled by the hydraulic motor, such that the boom distal end 20 may reach above a predetermined concrete pouring position. The hose 17 is connected to a concrete pump through the transporting pipe fixed on the boom segments. Concrete slurry is pumped to the boom distal end 20 through the transporting pipe on the boom 9 by the concrete pump, and is sprayed from the distal hose 17 to the predetermined concrete pouring position.

At present, in order to improve the control efficiency of the boom system, the boom system 8 of the concrete pump truck is automatically controlled mainly by an intelligent control system. The control principle of the intelligent control system is to take a predetermined coordinate system as a reference coordinate system, to determine the target position of the boom distal end 20 according to the predetermined concrete pouring position, to determine the angle of the hydraulic motor to be rotated and the amount of the hydraulic cylinders to be telescoped by an appropriate programming unit according to the position parameters and the target position of the boom distal end 20, to control the flow of hydraulic oil in the hydraulic system under the control of a computer, to make the hydraulic motor and the hydraulic cylinders to be cooperatively actuated in accordance with a predetermined strategy so as to cause the boom distal end 20 to perform predetermined actions to reach the target position, and to perform the predetermined concrete pouring work in the predetermined position (for details, please refer to the Chinese patent document CN1975070).

It can be known from the existing control manner, the key of controlling the boom system 8 is to precisely determine the position parameters of the boom distal end 20. At present, the intelligent control system mainly determines inclination angles of the boom segments by using inclination sensors, then determines posture parameters of the boom segments according to the obtained inclination angles and the predetermined strategy, and finally determines position parameters of the boom distal end 20 in the predetermined coordinate system according to the posture parameters of the boom segments.

Though the position parameters of the boom distal end 20 may be obtained in the prior art, in an actual control process, there are errors in the obtained inclination angles due to the factors of the inclination sensors such as the precision, the temperature drift and the installation mode. Besides, the deformations of the boom segments of the boom 9 may be varied depending on different pumping flows and different pumping speeds of the concrete pump. Thus, there are large errors in the obtained posture parameters of the boom segments, and the errors of the posture parameters of the boom segments may be accumulated due to the sequentially hinged structure of the boom segments, such that the final obtained position parameters of the boom distal end 20 are substantially different from the target position. It is difficult to meet the requirement of controlling the boom system, so as to affect the operation efficiency and using performance of the concrete pump truck.

At present, the precision of the posture parameters of the boom segments and the position parameters of the boom distal end 20 is mainly improved by the following two manners. First, the performance of the inclination sensor is improved so as to reduce the error of the inclination angle obtained by the inclination sensor. Second, the posture parameters of the boom are compensated according to the deformation characteristic of the boom, so as to reduce the errors caused by the deformations of the boom. However, the characteristics and the individual differences of the inclination sensor and the uncertainty of the deformations of the boom limit the improvement of the precision of the posture parameters of the boom segments and the position parameters of the boom distal end 20.

The patent document CN200810136105 discloses a technical solution in which a GPS module is used as a position sensor, and the posture parameters of the boom segments are determined by taking the ground as a reference. However, the technical solution only discloses a method for determining coordinate parameters of a predetermined detection point of a boom system, which cannot reduce errors of the posture parameters of the boom segments and the position parameters of the boom distal end 20. Thus, it is difficult to meet the requirement of controlling the boom system in an actual operation.

Therefore, it is a technical difficulty in the art to obtain the position parameters of the predetermined position of the boom system in a higher precision.

### SUMMARY OF THE INVENTION

In view the above technical difficulties, one object of the present disclosure is to provide a positioning method and a positioning device of a boom system, which can obtain position parameters of a predetermined position of the boom system in a relatively high precision.

Based on the above positioning device of the boom system, another object of the present disclosure is to provide a concrete pump truck including the above positioning device.

The positioning method of the boom system according to the present disclosure includes the steps of:

S100 of obtaining initial position parameters of a detection point according to observation of a mobile GPS receiver to a predetermined satellite group, and obtaining carrier wave phase information transmitted by a reference GPS receiver; wherein the reference GPS receiver is mounted in a predetermined reference station and obtains the carrier wave phase information according to the observation to the satellite group; the detection point is located at a predetermined position of the boom system, and a distance between the boom system and the reference station is less than a predetermined value; and

S200 of obtaining position parameters of the detection point according to the carrier wave phase information and the initial position parameters.

Optionally, the carrier wave phase information includes carrier wave phase correction or carrier wave phase.

Preferably, the carrier wave phase information respectively transmitted by a plurality of reference GPS receivers is obtained in step S100.

Step S200 includes the following steps of:

S210 of obtaining corrected carrier wave phase information according to a plurality of the carrier wave phase information; and

S220 of obtaining position parameters of the detection point according to the corrected carrier wave phase information and the initial position parameters.

The positioning device of the boom system according to the present disclosure includes a processor and at least one mobile GPS receiver. The processor includes a receiving unit and a processing unit.

The mobile GPS receiver is mounted at a detection point, and configured to obtain initial position parameters of the detection point according to observation to a predetermined satellite group. The detection point is located at a predetermined position of the boom system.

The receiving unit is configured to receive carrier wave phase information transmitted by a reference GPS receiver and the initial position parameters. The reference GPS receiver is mounted in a predetermined reference station and is configured to obtain the carrier wave phase information according to the observation to the satellite group. A distance between the boom system and the reference station is less than a predetermined value. The processing unit is configured to obtain position parameters of the detection point according to the initial position parameters and the carrier wave phase information.

Optionally, the carrier wave phase information includes carrier wave phase correction or carrier wave phase.

Preferably, the receiving unit is configured to receive the carrier wave phase information transmitted by a plurality of predetermined reference GPS receivers; and the processing unit includes a correcting module and a central module. The correcting module is configured to obtain corrected carrier wave phase information according to a plurality of carrier wave phase information, and the central module is configured to obtain position parameters of the detection point according to the corrected carrier wave phase information and the initial position parameters.

The concrete pump truck according to the present disclosure includes a base, a rotating platform and a boom. A lower end of the boom is connected with the rotating platform. The boom includes at least three boom segments hinged in sequence. The rotating platform is mounted on the base by a swiveling mechanism. Relative movements between the rotating platform and the base, between the boom and the rotating platform, and between the boom segments are driven by hydraulic members. The concrete pump truck further includes an intelligent control system and any of the above positioning devices of the boom system. At least one detection point is located on a distal boom segment. The intelligent control system is configured to control positions of a boom distal end according to the position parameters of the detection point. The boom distal end is an outer end of the distal boom segment.

Preferably, the positioning device of the boom system includes a plurality of mobile GPS receivers. The detection point includes a static detection point and a dynamic detection point. The static detection point is fixed relatively to the base and has predetermined coordinate parameters in a predetermined coordinate system. At least one dynamic detection point is located on the distal boom segment. The predetermined coordinate system is a reference coordinate system for the intelligent control system controlling the boom system. The position parameters of the detection point are the coordinate parameters of the dynamic detection point in the predetermined coordinate system obtained by the processing unit according to the position parameters of the static detection point and the dynamic detection point.

Preferably, the detection point includes a plurality of dynamic detection points. The plurality of dynamic detection points are respectively located on the boom segments.

Preferably, the dynamic detection points are respectively located at the outer ends of the boom segments.

Compared with the prior art, in the positioning method according to the present disclosure, the mobile GPS receiver is used to obtain the initial position parameters of the detection point, and carrier wave phase information transmitted by the reference GPS receiver is used to correct the initial position parameters of the detection point according to the carrier wave phase differential principle, so as to obtain the position parameters of the detection point. In the technical solution, the position parameters of the detection point are obtained by utilizing the carrier wave phase differential principle. The precision of the obtained position parameters may be up to a level of a centimeter or higher. Therefore, the position parameters of the detection point may be more precisely determined. When the position parameters of predetermined portions of the boom segments or the position parameters of the boom distal end are detected, their position parameters may be precisely determined. The deformation of the boom and thus the errors of sensors are avoided, so as to meet the requirement of precisely controlling the boom, which is helpful to improve the operation efficiency of the concrete pump.

In a further technical solution, corrected carrier wave phase information is obtained according to the carrier wave phase information obtained by a plurality of reference GPS receivers, and the corrected carrier wave phase information is used as the basis to obtain the position parameters of the detection point, which may further improve the accuracy of the position parameters of the detection point.

In addition, the positioning device of the boom system according to the present disclosure can carry out the above positioning method, and also may have corresponding technical effects.

Since the concrete pump truck according to the present disclosure includes the above positioning device of the boom system, the concrete pump truck also has corresponding technical effects. In a preferable technical solution, the positioning device also may convert the position parameters of the detection point, specifically, the position parameters making reference to the ground are converted into the coordinate parameters in the predetermined coordinate system, and the predetermined coordinate system is fixed relatively to the base of the concrete pump truck. Thus, the intelligent control system can quickly determine the amounts of movement of the hydraulic members of the boom system according to the target position and the coordinate parameters of the boom distal end in the predetermined coordinate system, thereby improving the control efficiency.

### BRIEF DESCRIPTION OF THE DRAWING

Fig. 1 is an overall structural view of a concrete pump truck;

Fig. 2 is a principle schematic view of a positioning method of a boom system according to the present disclosure;

Fig. 3 is a flowchart of a positioning method of a boom system according to a first embodiment of the present disclosure;

Fig. 4 is a flowchart of a positioning method of a boom system according to a second embodiment of the present disclosure; and

Fig. 5 is a structural block diagram of a positioning device of a boom system according to the present disclosure.

### DETAILED DESCRIPTION

GPS (Global Positioning System) is a radio space positioning system, which may determine position parameters of a predetermined place on the surface of the earth by utilizing a predetermined satellite group and a reference station on the ground and taking the ground as a reference. At present, the GPS system is widely used in various fields. The basic application principle of the GPS system is to position the target place, to determine the position parameters thereof, so as to provide a reference for the next operation. For example, the position parameters of aircrafts and ships are determined, so as to determine the course thereof to realize the navigation of the aircrafts and ships. The GPS system may also be applied to determine longitude, latitude and altitude of the predetermined place, so as to achieve surveying and mapping of a predetermined area, etc.

With the development of the engineering machinery technology, precisely controlling a predetermined component of the engineering machinery has become one of important contents of the engineering machinery technology. The precondition for precisely controlling the predetermined component is to precisely determine the position parameters of the predetermined component. Currently, the position parameters of the predetermined component are determined by referencing to corresponding position of the engineering machinery per se. However, due to errors and deformations of the structure and components of the engineering machinery, there would be a greater error in the position parameters determined in this manner, and these errors are varied due to the movement of the components of the engineering machinery, which limits the improvement of the precision of the position parameters. For this reason, the spirit of the technical solution according to the present disclosure is, instead of the conventional manner in which the position parameters of the predetermined component are determined based on corresponding position inside the engineering machinery, to apply the GPS positioning technology to the control process of the engineering machinery, such that the position parameters of the predetermined component may be determined by fully using the function of precise positioning of the GPS system and establishing an appropriate reference outside the engineering machinery, which avoids adverse influence on the precision due to the internal errors of the engineering machinery, thereby increasing the precision and the accuracy of the position parameters of the predetermined component.

The technical solutions according to the present disclosure will be described in detail with reference to drawings. The description in this section only is illustrative and explanatory, and shouldn't be deemed to limit the protection scope of the present disclosure.

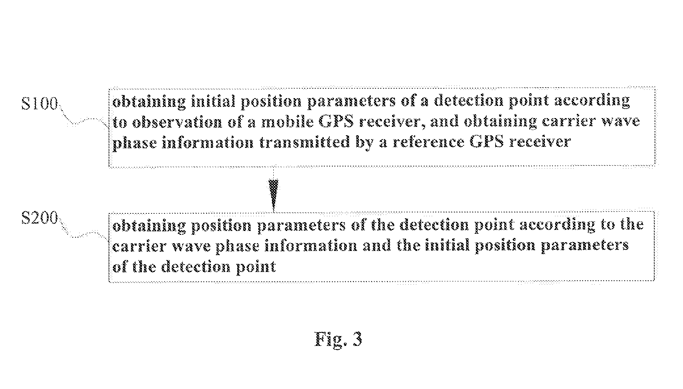

Referring to Figs. 2 and 3, Fig. 2 is a principle schematic view of a positioning method of a boom system according to the present disclosure, and Fig. 3 is a of a positioning method of a boom system according to a first embodiment of the present disclosure.

The positioning method of the boom system includes the following steps.

In S 1 00, initial position parameters of a detection point 230 are obtained according to the observation of a mobile GPS receiver 520 to a predetermined group 210, and carrier wave phase information transmitted by a reference GPS receiver is obtained.

The mobile GPS receiver 520 observes the satellite group 210 based on the principle of the carrier wave phase measurement, so as to maintain a relatively high measuring precision. The mobile GPS receiver 520 is mounted at the detection point 230 of the boom system. The detection point 230 may be an appropriate predetermined position according to actual operating requirements, so as to facilitate observing the satellite group 210 by the mobile GPS receiver 520.

The reference GPS receiver is mounted in a reference station 22 which already has position parameters precisely determined, which may be position parameters making reference to the ground. The reference GPS receiver observes the same satellite group 210 based on the principle of carrier wave phase measurement, and obtains carrier wave phase information according to satellite carrier wave signal. The carrier wave phase information may he carrier wave phase correction, or may be carrier wave phase.

Based on the principle of carrier wave phase differential measurement, in order to keep the usability of carrier wave phase information to the mobile GPS receiver 520 and reduce error caused by the transmission delay between the reference GPS receiver and the mobile GPS receiver 520, the distance between the boom system and the reference station 220 should be less than a predetermined value, That is, the distance between the detection point 230 and the reference station 220 is less than the predetermined value, preferably less than 500 kilometers. Therefore, an appropriate reference station 220 should be selected according to the location of the boom system to transmit carrier wave phase information.

In S200, position parameters of the detection point 230 are obtained according to the carrier wave phase information and the initial position parameters of the detection point 230. Based on the carrier wave phase differential principle, a distance correction may be obtained according to the carrier wave phase information, and then the initial position parameters may be corrected by using the distance correction to eliminate a satellite clock error, an ephemeris error, an ionosphere error and a troposphere error, so as to improve the precision of the position parameters of the detection point 230.

In this embodiment, more precise position parameters of the detection point 230 may be obtained by using the carrier wave phase differential principle. The precision of the position parameters may be in a level of a centimeter or higher. In actual control operation, the detection point 230 may be set at an appropriate location according to actual demands. For example, the detection points 230 may be set on the boom segments of the boom 9, such that posture parameters of the boom segments may be accurately determined according to the position parameters of the detection points 230, or the detection point 230 may be set on the boom distal end 20, which may accurately determine the position parameters of the boom distal end 20 to meet the requirement of accurately controlling the boom system, thereby improving the efficiency of controlling the concrete pump truck boom system.

In order to reduce the error when the reference GPS receiver transmits carrier wave phase information, another positioning method of the boom system is provided in a second embodiment.

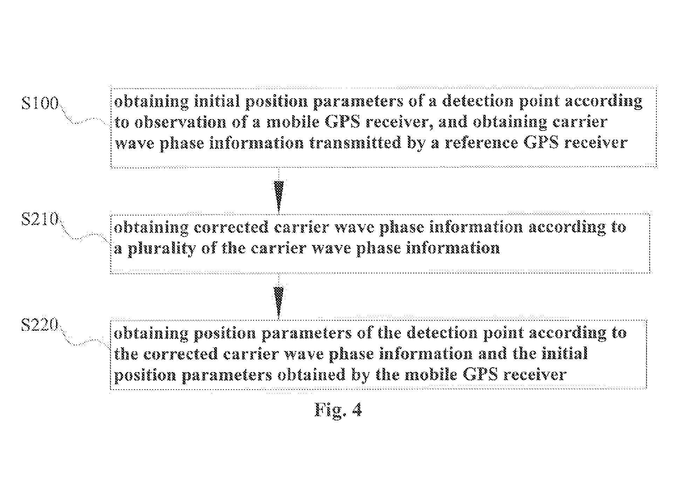

Referring to Fig. 4, a flowchart of a positioning method of a boom system according to a second embodiment of the present disclosure is shown. Compared with the positioning method of the boom system according to the first embodiment, differences therebetween are given as follows.

In step S100, carrier wave phase information respectively transmitted by a plurality of reference GPS receivers may be obtained. The plurality of reference GPS receivers may be reference GPS receivers respectively located at difference reference stations 220, or may be reference GPS receivers located at the same reference station 220.

Step S200 may include the following steps.

In S210, corrected carrier wave phase information is obtained according to a plurality of carrier wave phase information. There are many methods for obtaining corrected carrier wave phase information. For example, corrected carrier wave phase information may be obtained by a mean value, or corrected carrier wave phase information may be obtained by a mean square deviation, or the like.

In S220, position parameters of the detection point 230 are obtained according to the corrected carrier wave phase information and the initial position parameters obtained by the mobile GPS receiver 520.

This method can reduce errors caused by the reference station, so as to improve the precision of the position parameters of the detection point 230.

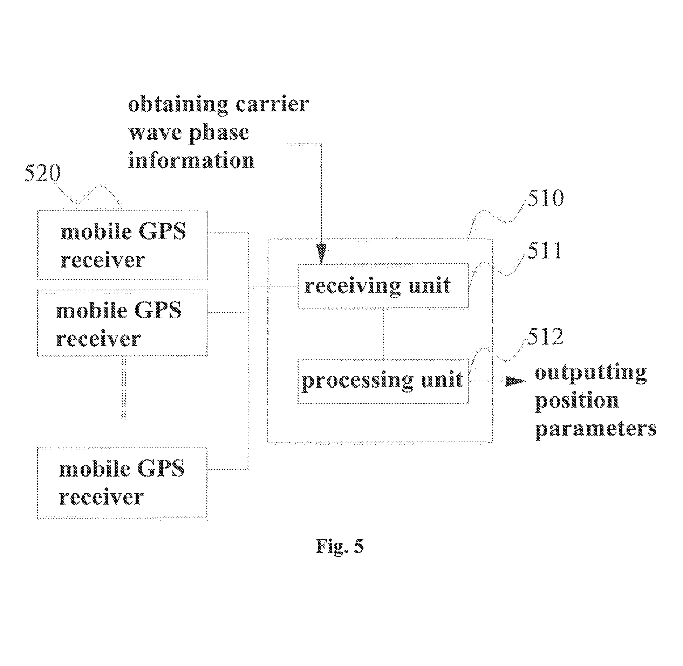

Based on the above positioning method of the boom system, the present disclosure also provides a positioning device of the boom system for determining the position parameters of a predetermined position of the boom system. Referring to Fig. 5, a structural block diagram of a positioning device of a boom system according to the present disclosure is shown. The positioning device includes a processor 510 and a plurality of mobile GPS receivers 520. The processor 510 includes a receiving unit 511 and a processing unit 512.

The plurality of mobile GPS receivers 520 are respectively mounted at a plurality of detection points 230 to respectively obtain the initial position parameters of corresponding detection points 230 according to the observation to the satellite group 210. In the same manner as the positioning method described above, the detection points 230 may be selected at appropriate predetermined positions according to actual operating requirements, so as to facilitate observing the satellite group 210 by the mobile GPS receivers 520. In addition, in order to facilitate the determination of the posture parameters of the boom segments of the boom 9, the detection points 230 are preferably located at outer ends of the boom segments, which can more easily determine the posture parameters of the boom segments from the position parameters of the outer ends of the boom segments.

The receiving unit 511 is used to receive carrier wave phase information transmitted by the reference GPS receiver and the initial position parameters of the detection points 230. The reference GPS receiver is mounted in the predetermined reference station 220, and can obtain carrier wave phase information according to the observation to satellite group 210. Likewise, in order to reduce errors caused by the reference GPS receiver transmitting carrier wave phase information, the distances between the detection points 230 and the reference station 220 may be less than the predetermined value. Like the method described above, the distance between the boom system and the reference station 220 may be less than 500 kilometers.

The processing unit 512 is used to obtain the position parameters of the detection points 230 according to the initial position parameters of the detection points 230 and carrier wave phase information. Carrier wave phase information may be carrier wave phase corrections and the position parameters of the reference station 220, or may be carrier wave phases and the position parameters of reference station 220. The processing unit 512 may determine distance corrections according to carrier wave phase information, and correct the initial position parameters of the detection points 230 according to the distance corrections, so as to obtain higher precise position parameters of the detection points 230.

Likewise, in order to improve the precision of the position parameters, in the same manner as the method described above, the receiving unit 511 may simultaneously receive carrier wave phase information transmitted by a plurality of reference GPS receivers. The processing unit 512 may also include a correcting module and a central module. The correcting module can obtain corrected carrier wave phase information according to a plurality of carrier wave phase information, and the central module can obtain the position parameters of the detection point 230 according to corrected carrier wave phase information and the initial position parameters of the detection points 230.

Based on the above positioning device of the boom system, a concrete pump truck is provided. The concrete pump truck includes a concrete pump and a boom system 8. Referring to Fig. 1, the boom system 8 includes a base 10, a rotating platform 11 and a boom 9. The lower end of the boom 9 is connected with the rotating platform 11, and the boom 9 includes a plurality of boom segments hinged in sequence, which are respectively indicated by numerals 12, 13, 14, 15 and 16. The boom segment 16 is the distal boom segment, and the outer end thereof forms a boom distal end 20. The rotating platform 11 is mounted on the base 10 by a swiveling mechanism. Relative movements between the rotating platform 11 and the base 10, between the boom 5 and the rotating platform 11, and between the boom segments are driven by hydraulic members. The concrete pump truck further includes an intelligent control system in the prior art. The intelligent control system can control the posture of the boom segments of the boom 9 according to the relationship between the position parameters and a target position of the boom distal end 20, so as to allow the boom distal end 20 to reach the target position for performing the concrete pouring work. The specific control principle is the same as that in the prior art, which will not described repeatedly.

The present disclosure is different from the prior art in that the concrete pump further includes the above positioning device of the boom system in which at least one detection point 230 is located on the distal boom segment 16, such that the positioning device can provide the position parameters of the boom distal end 20 to the intelligent control system; and the intelligent control system may adjust the posture of the boom segments of the boom 9 according to the position parameters and target position parameters, so as to allow the boom distal end 20 to reach the target position, thereby accomplishing the control to the boom system 8.

In order to facilitate the determination of the position parameters of the boom distal end 20, a preferable technical solution is that the detection point 230 located on the distal boom segment 16 coincides with the boom distal end 20. Thus, the position parameters of the detection point 230 may represent, the position parameters of the boom distal end 20. It can be understood that the detection point 230 is not limited to coincide with the boom distal end 2.0. As long as the detection point 230 is located at predetermined position of the distal boom segment 16 and there is a predetermined position relationship between the boom distal end 20 and the predetermined position, the position parameters of the boom distal end 20 may be determined according to the position parameters of the detection point 230, so as to prevent the error from increasing by reducing the accumulation of the deformations of the boom segments, thereby achieving the object of the present disclosure.

In the case that only one detection point 230 is provided in the positioning device and located on the distal boom segment 16, the posture parameters of other boom segments may be determined according to the technical solution in the prior art. In this case, since the position parameters of the boom distal end 20 may be more precisely determined, the position parameters of the boom distal end 20 may he easily obtained, which may meet the requirement of precisely controlling the boom system 8 to achieve the object of the present disclosure.

In order to more precisely determine the posture parameters of the boom segments such that the intelligent control system can precisely adjust the postures of the boom segments, a preferable technical solution is that detection points 230 are respectively provided on the boom segments of the boom 9, and the mobile GAPS receiver 520 is provided at each detection point. The position parameters of each detection point 230 may be precisely determined in the same manner described above, so as to more precisely determine the posture parameters of each boom segment, which provides a premise for the intelligent control system to adjust the postures of the boom segments. A preferable technical solution is that the detection points 230 are provided at the outer ends of the boom segments. Thus, the position parameters of the inner ends and the outer ends of corresponding boom segments may be more conveniently determined, and the posture parameters of the boom segments may be very easily determined according to the position parameters of the inner ends and the outer ends.

According to GPS positioning principle, directly obtained position parameters of the detection point 230 may be parameters making reference to the ground (including longitude, latitude and altitude). Thus, the position parameters of the detection point 230 may be utilized in two modes.

In the first mode, the position parameters of the detection point 230 making reference to the ground are directly utilized. In this case, the coordinate system making reference to the ground should be established in the intelligent control system, and the posture parameters of the boom segments, the position parameters and the target position of the boom distal end 20 also should be determined making reference to the ground. This mode will increase the complexity of the intelligent control system, and will prolong the response time and the control cycle of he intelligent control system, Therefore, the second mode described below is preferable.

In the second mode, the position parameters of the detection point 230 making reference to the ground are converted. In order to simplify the structure of the intelligent control system and shorten the response time and the control cycle of the control system, the present disclosure provides another concrete pump truck in which the position parameters of the detection point 230 making reference to the ground are converted. In the concrete pump truck, the detection points 230 include a static detection point and a plurality of dynamic detection points. The static detection point is fixed relatively to the base 10, and thus may be provided on the base 10, and has determined coordinate parameters in the predetermined coordinate system, Preferably, the static detection point coincides with the origin of the predetermined coordinate system. Similar to the prior art, the predetermined coordinate system is a reference coordinate system for the intelligent control system controlling the boom system, The plurality of dynamic detection points are located on the boom 9, and particularly located on the boom segments respectively. Since the coordinate parameters of the static detection point in the predetermined coordinate system have been determined, the processing unit 512 can obtain the coordinate parameters of the dynamic detection points in the predetermined coordinate system according to the relationship between the position parameters of the static detection point making reference to the ground and the position parameters of the dynamic detection points making reference to the ground, and the coordinate parameters serve as position parameters to be provided to the intelligent control system. Thus, the intelligent control system may directly utilize the position parameters to control the boom system 8. Such technical solution may fully utilize the control structure of the intelligent control system in the prior art, which facilitates the modification of the concrete pump truck. Of course, it is appreciated from the above description that, in this embodiment, the detection points 230 may include one static detection point and one dynamic detection point, which may also achieve the object of the present disclosure.

Described above only is the preferred embodiments of the present disclosure. It should be noted that many improvements and modifications may be made by those skilled in the art without departing from the principle of the present disclosure, and these improvements and modifications should be deemed to fall into the protection scope of the present disclosure.

## Claims

1. A positioning method of a boom system, **characterized by** comprising the steps of:
S100 of obtaining initial position parameters of a detection point (230) according to observation of a mobile GPS receiver (520) to a predetermined satellite group (210), and obtaining carrier wave phase information transmitted by a reference GPS receiver; wherein the reference GPS receiver is mounted in a predetermined reference station (220) and obtains the carrier wave phase information according to observation to the satellite group (210); the detection point (230) is located at a predetermined position of the boom system, and a distance between the boom system and the reference station (220) is less than a predetermined value; and
S200 of obtaining position parameters of the detection point (230) according to the carrier wave phase information and the initial position parameters.

2. The positioning method of the boom system according to claim 1, wherein the carrier wave phase information comprises carrier wave phase correction or carrier wave phase.

3. The positioning method of the boom system according to claim 1 or 2, wherein the carrier wave phase information respectively transmitted by a plurality of reference GPS receivers is obtained in step S100; and
step S200 comprises the steps of:
S210 of obtaining corrected carrier wave phase information according to a plurality of the carrier wave phase information; and
S220 of obtaining position parameters of the detection point (230) according to the corrected carrier wave phase information and the initial position parameters.

4. A positioning device of a boom system, **characterized by** comprising a processor (510) which comprises a receiving unit (511) and a processing unit (512), and at least one mobile GPS receiver (520);
wherein the mobile GPS receiver (520) is mounted at a detection point (230) and configured to obtain initial position parameters of the detection point (230) according to observation to a predetermined satellite group (210); the detection point (230) is located at a predetermined position of the boom system;
the receiving unit (511) is configured to receive carrier wave phase information transmitted by a reference GPS receiver and the initial position parameters; the reference GPS receiver is mounted in a predetermined reference station (220) and is configured to obtain the carrier wave phase information according to the observation to the satellite group (210); a distance between the boom system and the reference station (220) is less than a predetermined value;
the processing unit (512) is configured to obtain position parameters of the detection point (230) according to the initial position parameters and the carrier wave phase information.

5. The positioning device of the boom system according to claim 4, wherein
the carrier wave phase information comprises carrier wave phase correction or carrier wave phase.

6. The positioning device of the boom system according to claim 4 or 5, wherein
the receiving unit (511) is configured to receive the carrier wave phase information transmitted by a plurality of predetermined reference GPS receivers; and
the processing unit (512) comprises a correcting module and a central module, the correcting module is configured to obtain corrected carrier wave phase information according to a plurality of carrier wave phase information, the central module is configured to obtain position parameters of the detection point (230) according to the corrected carrier wave phase information and the initial position parameters.

7. A concrete pump truck, comprising a base (10), a rotating platform (11), a boom (9) and an intelligent control system, in which a lower end of the boom (9) is connected with the rotating platform (11), the boom (9) comprises at least three boom segments hinged in sequence, the rotating platform (11) is mounted on the base (10) by a swiveling mechanism, relative movements between the rotating platform (11) and the base (10), between the boom (9) and the rotating platform (11), and between the boom segments are driven by hydraulic members; **characterized by** further comprising the positioning device of the boom system as claimed in claim 4, 5 or 6, wherein
at least one detection point (230) is located on a distal boom segment (16); the intelligent control system is configured to control positions of a boom distal end (20) which is an outer end of a distal boom segment (16) according to the position parameters of the detection point (230).

8. The concrete pump truck according to claim 7, wherein the positioning device of the boom system comprises a plurality of mobile GPS receivers (520); the detection point (230) comprises a static detection point and at least one dynamic detection point; the static detection point is fixed relatively to the base (10) and has predetermined coordinate parameters in a predetermined coordinate system, the dynamic detection point is located on the distal boom segment (16); the predetermined coordinate system is a reference coordinate system for the intelligent control system controlling the boom system, the position parameters of the detection point (230) are the coordinate parameters of the dynamic detection point in the predetermined coordinate system obtained by the processing unit (512) according to the position parameters of the static detection point and the dynamic detection point.

9. The concrete pump truck according to claim 8, wherein the detection point (230) comprises a plurality of dynamic detection points which are respectively located on the boom segments.

10. The concrete pump truck according to claim 5, wherein the dynamic detection points are respectively located at the outer ends of the boom segments.
